Europäisches Patentamt

European Patent Office

Office européen des brevets

(19)

(11) Veröffentlichungsnummer: **0 180 762**
A2

## (12) EUROPÄISCHE PATENTANMELDUNG

(21) Anmeldenummer: **85112390.1**

(22) Anmeldetag: **01.10.85**

(51) Int. Cl.⁴: **B 32 B 15/08**

(30) Priorität: **06.10.84 DE 3436820**

(43) Veröffentlichungstag der Anmeldung:
**14.05.86 Patentblatt 86/20**

(84) Benannte Vertragsstaaten:
**DE FR GB IT NL SE**

(71) Anmelder: **BASF Aktiengesellschaft
Carl-Bosch-Strasse 38
D-6700 Ludwigshafen(DE)**

(72) Erfinder: **Welz, Martin
Kaiserslauterer Strasse 231.
D-6702 Bad Duerkheim(DE)**

(72) Erfinder: **Czauderna, Bernard, Dr.
Kapellenweg 34
D-6945 Hirschberg(DE)**

(72) Erfinder: **Stoffel, Karl-Heinz
Andreastrasse 20
D-6520 Worms(DE)**

(54) **Verbundwerkstoff.**

(57) Ein Verbundwerkstoff besteht aus einer Schicht A aus einem mit 10 bis 50 % Glasfasermatten verstärkten Polyolefin und einer Schicht D aus einem Metall, welche durch eine mechanische Haftbrücke B und eine Klebstoffschicht C miteinander verbunden sind. Der Klebstoff ist ein thermoplastisches Polyurethanelastomeres, vorzugsweise mit einem Schmelzbereich von 110 bis 250°C.

Die Verbundwerkstoffe finden als Automobilteile, Gehäuse und Behälter Verwendung.

EP 0 180 762 A2

Croydon Printing Company Ltd.

BASF Aktiengesellschaft                    O.Z. 0050/37389

0180762

Verbundwerkstoff

Die Erfindung betrifft einen Verbundwerkstoff aus einer tragenden Schicht A aus einem glasfasermattenverstärkten Polyolefin und einer relativ dünnen Metallschicht, die durch eine mechanische Haftbrücke B und eine Klebstoffschicht C miteinander verbunden sind.

Werkstoffe aus glasmattenverstärkten Polyolefinen werden in technischem Maßstab hergestellt und finden z.B. als Automobilteile, als Gehäuse und Behälter Verwendung.

Polyolefine und Metalle haften normalerweise schlecht aneinander, so daß zum Verbinden der Schichten Haftvermittler angewandt werden müssen. Man hat dazu bisher verschiedene Wege eingeschlagen: Man hat als Haftvermittler Schmelzkleber eingesetzt, oder die Verbindung durch Ätzen der Metalloberfläche oder durch lösungsmittelhaltige Kleber hergestellt.

Diese Methoden sind verhältnismäßig umständlich und teuer, der Verbund ist meist nicht fest genug und die mechanischen und thermischen Eigenschaften des Verbundwerkstoffs können durch eine zusätzliche Haftvermittlerschicht ungünstig beeinflußt werden.

Der Erfindung lag also die Aufgabe zugrunde, einen Verbundwerkstoff zu entwickeln, bei dem eine Schicht A aus einem Polypropylen mit sehr guter Haftung mit einer verstärkten Schicht D aus einem duktilen, verformbaren Metall verbunden ist.

Diese Aufgabe wird gelöst, wenn als Haftvermittler eine mechanische Haftbrücke B zusammen mit einer Klebstoffschicht C auf Basis eines thermoplastischen Polyurthan-Elastomeren verwendet wird.

Gegenstand der Erfindung ist ein Verbundwerkstoff aus einer Schicht A aus einem mit 10 bis 50 Gew.-% Glasfasermatten verstärktem Polyolefin und einer Schicht D aus einem verstreckbarem Metall, welche durch eine mechanische Haftbrücke B und eine Klebstoffschicht C miteinander verbunden sind, wobei der Klebstoff ein thermoplastisches Polyurethan--Elastomeres ist.

Die tragende Schicht A besteht aus einem glasmattenverstärkten Polyolefin und kann 0,5 bis 8, vorzugsweise 1 bis 4 mm dick sein. Unter Polyolefinen werden dabei die Homo- und Copolymerisate des Ethylens und des Propylens mit copolymerisierbaren olefinisch ungesättigten Verbindungen verstanden. Bevorzugte Polyolefine sind Polyethylen der Dichte 0,890 bis 0,965 g/cm$^3$
Dd/Ke

(nach DIN 53 479) und des Schmelzindex von 0,1 bis 20 g/10 min (nach ASTM D 1238-65 T bei einer Temperatur von 190°C und einem Auflagegewicht von 2,16 kg) sowie Polypropylen der Dichte 0,80 bis 0,91 g/cm$^3$ und des Schmelzindex von 0,1 bis 80 g/10 min (nach ASTM-D, 1238-65 T bei 230°C und 2,16 kg Belastung).

Die Polyolefine können zur Erhöhung ihrer Schlagzähigkeitseigenschaften gegebenenfalls noch 1 bis 20 Gew.-% an üblich bekannten synthetischen Kautschuken oder Blockcopolymerisaten aus Styrol und Dienen enthalten. Als besonders geeignetes Polyolefin wird isotaktisches Polypropylen verwendet. Dieses enthält 3 bis 10 Gew.-% eines Polypropylens, das in siedenden und anschließend auf Zimmertemperatur wieder abgekühlten Xylol, bei einem Gewichtsverhältnis von Polypropylen zu Xylol wie 5 : 95, löslich ist.

Die Polyolefine sind mit 10 bis 50, bevorzugt 20 bis 40 Gew.-% Glasfasermatten verstärkt.
Zusätzlich zu den Glasfasermatten können die Polyolefinmassen noch einschlägig bekannte Flammschutzmittel, Mittel zur Verbesserung der Schlagfestigkeit wie Polyethylen niederer Dichte, Stabilisatoren oder Polymerisat-Abfallstoffe enthalten.

Für die Schicht D sind vor allem weiche Metalle, wie Aluminium, Kupfer, Blei, Zinn, Magnesium oder ihre Legierungen geeignet. Die Metallfolien sind 10 bis 1000 µm, vorzugsweise 20 bis 200 µm dick und haben eine Bruchdehnung von 10 bis mehr als 25 %. Der Gewichtsanteil an Metall ist beim erfindungsgemäßen Verbundstoff gering. Das Metall kann, da es keine tragende Funktion auszuüben hat, in weichem, verstreckbarem Zustand vorliegen, so daß aus dem beanspruchten Verbundwerkstoff auch räumlich geformte Teile hergestellt werden können.

Die Metallfolien können einseitig oder beidseitig aufgebracht werden. Die Aufgaben, die die Metallfolien auf einem Bauteil erfüllen können, sind sehr vielfältig, sie können sowohl dekorativ als auch funktionell sein. Sie können z.B. die Leitfähigkeit des Bauteiles bewirken, elektromagnetische Strahlen abschirmen oder - in Antennen - bündeln oder Wärmestrahlung reflektieren und damit das Bauteil vor Überhitzung schützen.

Die mechanische Haftbrücke B besteht vorzugsweise aus einem Faservlies. Dabei kommen Spinn- oder Krempelvliese aus Kunstfasern in Frage, z.B. aus linearen Polyestern, wie Polyethylenterephthalat, aus Polyolefinen, wie Polyethylen und Polypropylen, ferner aus Polyvinylchlorid, Polyacrylnitril, Polyamid oder Mischungen der angeführten Fasern.

Ebenso sind Glasfaservliese sehr gut geeignet. Die Vliese können thermisch oder mechanisch oder mit einem Bindemittel verfestigt sein. Ihr Flächengewicht kann zwischen 25 und 200 $g.m^{-2}$ liegen.

Der Klebstoff C ist erfindungsgemäß ein thermoplastisches Polyurethan-Elastomeres, vorzugsweise mit einem Schmelzbereich von 110 bis 250°C, insbesondere von 180 bis 210°C. Es unterscheidet sich grundlegend von den üblichen Polyurethan-Reaktivklebern, die aus zwei Komponenten, einem Polyisocyanat und einem Polyol bestehen, welche - meist in Gegenwart eines Katalysators - bei Raumtemperatur bis maximal 80°C miteinander reagieren.

Das thermoplastische Polyurethan-Elastomere ist ein Einkomponenten-Kleber, der als solcher eingesetzt wird. Er wird gewöhnlich hergestellt durch Umsetzung von

a)   organischen Diisocyanaten mit
b)   Polyhydroxyverbindungen mit Molekulargewichten von 500 bis 8000 und
c)   Kettenverlängerungsmitteln mit Molekulargewichten von 60 bis 400
   in Gegenwart von
d)   Katalysatoren und gegebenenfalls
e)   Hilfsmitteln und/oder
f)   Zusatzstoffen.

a)   Als organische Diisocyanate (a) kommen beispielsweise aliphatische, cycloaliphatische und vorzugsweise aromatische Diisocyanate in Betracht. Im einzelnen seien beispielhaft genannt: aliphatische Diisocyanate, wie Hexamethylen-diisocyanat, cycloaliphatische Diisocyanate, wie Isophoron-diisocyanat, 1,4-Cyclohexan-diisocyanat, 1-Methyl-2,4- und -2,6-cyclohexan-diisocyanat sowie die entsprechenden Isomerengemische, 4,'-, 2,4'- und 2,2'-Dicyclohexyl-methan-diisocyanat sowie die entsprechenden Isomerengemische und vorzugsweise aromatische Diisocyanate, wie 2,4-Toluylen-diisocyanat, Gemische aus 2,4- und 2,6-Toluylen-diisocyanat, 4,4'-, 2,4'- und 2,2'-Diphenylmethan-diisocyanat, Gemische aus 2,4'- und 4,4'-Diphenyl-methan-diisocyanat, urethanmodifizierte flüssige 4,4'- und/oder 2,4'-Diphenylmethan-diisocyanate und 1,5-Naphthylen-diisocyanat. Vorzugsweise verwendet werden Hexamethylen-diisocyanat, Isophoron-diisocyanat, Diphenylmethan-diisocyanat-Isomerengemische mit einem 4,4'-Diphenylmethan-diisocyanatgehalt von größer als 96 Gew.-% und insbesondere 4,4'-Diphenylmethan-diisocyanat und 1,5-Naphthylen-diisocyanat.

b)    Als höhermolekulare Polyhydroxylverbindungen (b) mit Molekulargewichten von 500 bis 8000 eignen sich vorzugsweise Polyesterole. In
Betracht kommen jedoch auch andere hydroxylgruppenhaltige Polymere,
beispielsweise Polyacetale, wie Polyoxymethylene und vor allem wasserunlösliche Formale, z.B. Polybutandiolformal und Polyhexandiolformal,
und Polycarbonate, insbesondere solche aus Diphenylcarbonat und
Hexandiol-1,6, hergestellt durch Umesterung. Die Polyhydroxylverbindungen müssen zumindest überwiegend linear, d.h. im Sinne der
Isocyanatreaktionen difuktionell aufgebaut sein. Die genannten Polyhydroxylverbindungen können als Einzelkomponenten oder in Form von
Mischungen zur Anwendung kommen.

Geeignete Polyetherole können dadurch hergestellt werden, daß man ein
oder mehrere Alkylenoxide mit 2 bis 4 Kohlenstoffatomen im Alkylenrest mit einem Startermolekül, das zwei aktive Wasserstoffatome
gebunden enthält, umsetzt. Als Alkylenoxide seien z.B. genannt:
Ethylenoxid, 1,2-Propylenoxid, Epichlorhydrin und 1,2- und 2,3-
-Butylenoxid. Vorzugsweise Anwendung finden Ethylenoxid und
Mischungen aus Propylenoxid und Ethylenoxid. Die Alkylenoxide können
einzeln, alternierend nacheinander oder als Mischungen verwendet
werden. Als Startermoleküle kommen beispielsweise in Betracht:
Wasser, Aminoalkohole, wie N-Alkyl-diethanol-amine, beispielsweise
N-Methyl-diethanolamin und Diole, wie Ethylenglykol, 1,3-Propylenglykol, Butandiol-1,4 und Hexandiol-1,6. Gegebenenfalls können auch
Mischungen von Startermolekülen eingesetzt werden. Geeignete Polyetherole sind ferner die hydroxylgruppenhaltigen Polymerisationsprodukte des Tetrahydrofurans.

Vorzugsweise verwendet werden hydroxylgruppenhaltiges Polytetrahydrofuran und Polyetherole aus Propylenoxid und Ethylenoxid, in denen
mehr als 50 %, vorzugsweise 60 bis 80 % der OH-Gruppen primäre
Hydroxylgruppen sind und bei denen zumindest ein Teil des Ethylenoxids als endständiger Block angeordnet ist.

Solche Polyetherole können erhalten werden, indem man z.B. an das
Startermolekül zunächst das Propylenoxid und daran anschließend das
Ethylenoxid polymerisiert oder zunächst das gesamte Propylenoxid im
Gemisch mit einem Teil des Ethylenoxids copolymerisiert und den Rest
des Ethylenoxids anschließend anpolymerisiert oder schrittweise
zunächst einen Teil des Ethylenoxids, dann das gesamte Propylenoxid
und dann den Rest des Ethylenoxids an das Startermolekül anpolymerisiert.

Die im wesentlichen linearen Polyetherole besitzen Molekulargewichte von 500 bis 8000, vorzugsweise 600 bis 6000 und insbesondere 800 bis 3500. Sie können sowohl einzeln als auch in Form von Mischungen untereinander zur Anwendung kommen.

Geeignete Polyesterole können beispielsweise aus Dicarbonsäuren mit 2 bis 12 Kohlenstoffatomen und mehrwertigen Alkoholen hergestellt werden. Als Dicarbonsäuren kommen beispielsweise in Betracht: aliphatische Dicarbonsäuren, wie Bernsteinsäure, Glutarsäure, Adipinsäure, Korksäure, Azelainsäure und Sebacinsäure und aromatische Dicarbonsäuren, wie Phthalsäure, Isophthalsäure und Terephthalsäure. Die Dicarbonsäuren können einzeln oder als Gemische, z.B. in Form einer Bernstein-, Glutar- und Adipinsäuremischung, verwendet werden. Zur Herstellung der Polyesterole kann es gegebenenfalls vorteilhaft sein, anstelle der Carbonsäuren die entsprechenden Carbonsäurederivate, wir Carbonsäureester mit 1 bis 4 Kohlenstoffatomen im Alkoholrest, Carbonsäureanhydride oder Carbonsäurechloride zu verwenden. Beispiele für mehrwertige Alkohole sind Glykole mit 2 bis 16 Kohlenstoffatomen, wie Ethylenglykol, Diethylenglykol, Butandiol-1,4, Pentandiol-1,5, Hexandiol-1,6, Decandiol-1,10, 2,2-Dimethylpropandiol-1,3 und Dipropylenglykol. Je nach den gewünschten Eigenschaften können die mehrwertigen Alkohole allein oder gegebenenfalls in Mischungen untereinander verwendet werden.

Geeignet sind ferner Ester der Kohlensäure mit den genannten Diolen, insbesondere solchen mit 4 bis 6 Kohlenstoffatomen, wie Butandiol-1,4 und/oder Hexandiol-1,6, Kondensationsprodukte von ω-Hydroxycarbonsäuren, beispielsweise ω-Hydroxycapronsäure und vorzugsweise Polymerisationsprodukte von Lactonen, beispiels gegebenenfalls substituierten ω-Caprolactonen.

Als Polyesterole vorzugsweise verwendet werden Ethandiol-polyadipate, 1,4-Butandiol-polyadipate, Ethandiol-butandiol-polyadipate, 1,6-Hexandiol-neopentylglykol-polyadipate, 1,6-Hexandiol-1,4-butandiol-polyadipate und Polycaprolactone.

Die Polyesterole besitzen Molekulargewichte von 500 bis 6000, vorzugsweise von 800 bis 3500.

c)  Als Kettenverlängerungsmittel (c) mit Molekulargewichten von 60 bis 400, vorzugsweise 60 bis 300, kommen vorzugsweise aliphatische Diole mit 2 bis 12 Kohlenstoffatomen, vorzugsweise mit 2, 4 oder 6 Kohlenstoffatomen, wie z.B. Ethandiol, Hexandiol-1,6 Diethylenglykol,

0180762

Dipropylenglykol und insbesondere Butandiol-1,4 in Betracht. Geeignet sind jedoch auch Diester der Terephthalsäure mit Glykolen mit 2 bis 4 Kohlenstoffatomen, wie z.B. Terephthalsäure-bis-ethylenglykol oder -butandiol-1,4, Hydroxyalkylenether des Hydrochinons, wie z.B. 1,4-Di-(ß-hydroxyethyl)-hydrochinon, (cyclo)aliphatische Diamine, wie z.B. Isophoron-diamin, Ethylendiamin, 1,2-, 1,3-Propylen-diamin, N-Methyl-propylendiamin-1,3, N,N*-Diemthyl-ethylen-diamin und aromatische Diamine, wie z.B. 2,4- und 2,6-Toluylen-diamin, 3,5-Diethyl-2,4- und -2,6-toluylen-diamin und primäre ortho-di-, tri- und/oder tetraalkylsubstituierte 4,4*-Diamino-diphenylmethane.

Zur Einstellung von Härte und Schmelzpunkt der TPU können die Aufbaukomponenten (b) und (c) in relativ breiten molaren Verhältnissen variiert werden. Bewährt haben sich molare Verhältnisse von Polyhydroxylverbindungen (b) zu Kettenverlängerungsmitteln (c) von 1 : 1 bis 1 : 12, insbesondere von 1 : 1,8 bis 1 : 4,4, wobei die Härte und der Schmelzpunkt der TPU mit zunehmendem Gehalt an Diolen ansteigt.

Zur Herstellung der TPU werden die Aufbaukomponenten (a), (b) und (c) in Gegenwart von Katalysatoren (d) und gegebenenfalls Hilfsmitteln (e) und/oder Zusatzstoffen (f) in solchen Mengen zur Reaktion gebracht, daß das Äquivalenzverhältnis von NCO-Gruppen der Diisocyanate der Summe der Hydroxylgruppen oder Hydroxyl- und Aminogruppen der Komponenten (b) und (c) 1 : 0,85 bis 1,20, vorzugsweise 1 : 0,95 bis 1 : 1,05 und insbesondere ungefähr 1 : 1,02 beträgt.

d)    Geeignete Katalysatoren, welche insbesondere die Reaktion zwischen NCO-Gruppen der Diisocyanate (a) und den Hydroxylgruppen der Aufbaukomponenten (b) und (c) beschleunigen, sind die nach dem Stand der Technik bekannten und üblichen tertiären Amine, wie z.B. Triethylamin, Dimethylcyclohexylamin, N-Methylmorpholin, N,N*-Diemthyl-piperazin, Diazabicyclo-(2,2,2)-octan und ähnliche sowie insbesondere organische Metallverbindungen wie Titansäureester, Eisenverbindungen, Zinnverbindungen, z.B. Zinndiacetat, Zinndioctoat, Zinnlaurat oder die Zinndialkylsalze aliphatischer Carbonsäuren wie Dibutylzinndiacetat, Dibutylzinndilaurat oder ähnliche. Die Katalysatoren werden üblicherweise in Mengen von 0,001 bis 0,1 Teilen pro 100 Teilen Polyhydroxylverbindung eingesetzt.

Neben Katalysatoren können den Aufbaukomponenten auch Hilfsmittel (e) und/oder Zusatzstoffe (f) einverleibt werden. Genannt seien beispielsweise Gleitmittel, Inhibitoren, Stabilisatoren gegen Hydrolyse,

**0180762**

Licht, Hitze oder Verfärbung, Flammschutzmittel, Farbstoffe, Pigmente, anorganische und/oder organische Füllstoffe und Verstärkungsmittel.

Nähere Angaben über die obengenannten Hilfsmittel und Zusatzstoffe sind der Fachliteratur, beispielsweise der Monographie von J.H. Saunders und K.C. Frisch "High Polymers", Band XVI, Polyurethane, Teil 1 und 2, Verlag Interscience Publishers 1962 bzw. 1964 oder der DE-OS 29 01 774 zu entnehmen.

Bei einem bevorzugten Verfahren zur Herstellung des erfindungsgemäßen Verbundwerkstoffes wird zunächst die Metallfolie mit dem Haftvermittler versehen, bevor dieser Schichtstoff dann auf den Träger aus glasmattenverstärkten Polyolefinen aufgebracht wird.

Dazu wird der Schmelzkleber C vorzugsweise in einem Extruder aufgeschmolzen und über eine Breitschlitzdüse kontinuierlich auf die entfettete und vorgewärmte Metallfolie aufgetragen. In die noch schmelzflüssige Schicht wird dann das Vlies D mit Hilfe eines Walzenpaares eingedrückt und der Verbund über Kühlwalzen geführt und so fixiert. Dabei ist die Schichtstärke der Schmelzkleberschicht C so einzustellen, daß das Vlies D nur bis maximal zur Hälfte in die Schicht C eingebettet wird.

Anschließend wird dann die mit dem Haftvermittler beschichtete Folie ein- oder beidseitig auf das Trägermaterial A kaschiert. Das kann kontinuierlich, z.B. bei der Herstellung des Trägers geschehen, in dem die Metallfolie mit der Haftvermittlerseite zum Trägermaterial mit in die Preßvorrichtung führt. Dabei verankert sich das Vlies in der Polyolefinschmelzschicht. Es ist aber auch möglich, die Metallfolie erst der Formteilherstellung aufzukaschieren. Dazu wird das Trägermaterial über die Schmelztemperatur der Matrix erwärmt, die beschichtete Metallfolie - eventuell ebenfalls erwärmt - aufgelegt und die Schichten gemeinsam in einer Form verpreßt.

Ein weiteres Verfahren zur Herstellung der Verbundwerkstoffe wird so ausgeführt, daß die Beschichtung der Metallfolie mit Schmelzkleber und Vlies, die Fertigung des Trägers aus Glasmatten und Polyolefinschmelze und die Kaschierung beider Schichten in einem Arbeitsgang vorgenommen wird. Dazu wird die Metallfolie mit dem Schmelzkleber beschichtet und in noch schmelzfähigem Zustand gemeinsam mit dem Vlies in die Preßvorrichtung geführt, in die gleichzeitig auch die vorgewärmten Glasfasermatten und die Polyolefinschmelze eingezogen werden.

Grundsätzlich ist es auch möglich, den Klebstoff aus Lösung aufzubringen, diese Arbeitsweise ist aber umständlicher, da das Lösungsmittel anschließend wieder verdampft werden muß.

Bei einer weiteren Ausführungsform wird der Klebstoff C als Pulver aufgestrut bzw. als vorgefertigte Folie aufgelegt und dann aufgeschmolzen. Der Verbund Metallfolie/Klebstoff wird dann mit einem Faservlies als Schicht B zusammengeführt und fixiert. Diese Methoden erfordern eine Vorfertigung (Pulver bzw. Folie) und sind nur dann sinnvoll, wenn kein Extruder zur Verfügung steht.

Durch die erfindungsgemäßen Haftvermittler B und C erhält man eine hervorragende Haftverbindung der Schichten A und D, sowohl bei Raumtemperatur als auch bei 90°C, die auch nach längerer Lagerung des Verbundstoffes erhalten bleibt. Ein wieterer Vorteil ist in der einfachen Verarbeitung zur sehen.

Die erfindungsgemäßen Verbundwerkstoffe können nach verschiedenen Verfahren, wie Vakuum- oder Druckluftformen, Abkanten, Biegen, vorzugsweise aber durch Pressen zu Formkörpern verarbeitet werden.

Die in den Beispielen genannten Teile und Prozente beziehen sich auf das Gewicht.

Beispiel 1

Auf eine weiche, auf ca. 120°C vorgewärmte Aluminiumfolie von 60 µm Dicke, die eine Reißdehnung von ca. 15 % aufweist, wird eine 80 µm dicke Schicht aus einem Polyurethan-Elastomeren mit einem Schmelzbereich von 118 bis 210°C, bestehend aus einem Butandiol-Polyadipat, Butandiol-1,4 und 4,4ᴬ-Diphenylmethandiisocyanat über eine Breischlitzdüse aufextrudiert. In die noch flüssige Schmelzeschicht wird ein durch Nadeln verfestigtes Spinnvlies aus Polyethylenterephthalatfasern mit einem Flächengewicht von 100 g/m$^2$ mit Hilfe von auf ca. 80°C temperierten Walzen leich eingepreßt und über Kühlwalzen fixiert und abgezogen.

In einem zweiten Arbeitsgang wird das Trägermaterial aus einem mit 30 % Endlosglasfasermatten verstärktem isotaktischem Polypropylen auf 210°C erwärmt, die auf ca. 100°C temperierte, kaschierte Aluminiumfolie mit der Vliesseite auf das Trägermaterial gelegt und gemeinsam in einer ca. 70°C

0180762

warmen Form unter einem Druck von 50 bar verpreßt und abgekühlt. Obwohl das Formteil leicht gekrümmt ist, ist die Alufolie nicht aufgerissen. Die Haftfestigkeit, gemessen in Rollenschältest nach DIN 53 289 beträgt 5,5 N/mm.

Beispiel 2

Auf eine weiche Kupferfolie von 40 µm Dicke wird, wie im Beispiel 1 beschrieben, eine 50 µm dicke Schicht aus einem Polyurethan-Elastomeren aufgebracht und mit einem 30 $g/m^2$-Glasvlies beschichtet. Diese beschichtete Folie wird direkt bei der Herstellung des Trägers mit aufkaschiert, indem die Schichten gemeinsam die kontinuierliche Preßzone durchlaufen und so unter Druck abgekühlt werden. Der Träger wird durch Tränken von zwei auf 200°C vorgewärmten Glasmatten mit einem Schmelzestreifen aus isotaktischen Polypropylen gebildet.

<u>Patentansprüche</u>

1. Verbundwerkstoff aus einer Schicht A aus einem mit 10 bis 50 Gew.-%
   Glasfasermatten verstärkten Polyolefin und einer Schicht D aus einem
   Metall, welche durch eine mechanische Haftbrücke B und eine Klebstoffschicht C miteinander verbunden sind, <u>dadurch gekennzeichnet,</u>
   daß der Klebstoff ein thermoplastisches Polyurethan-Elastomer ist.

2. Verbundwerkstoff nach Anspruch 1, <u>dadurch gekennzeichnet,</u> daß das
   Polyurethanelastomer einen Schmelzbereich von 110 bis 250°C, vorzugsweise von 180 bis 210°C hat.

3. Verbundwerkstoff nach Anspruch 1, <u>dadurch gekennzeichnet,</u> daß die
   mechanische Haftbrücke B aus einem Faservlies besteht.

4. Verbundwerkstoff nach Anspruch 1, <u>dadurch gekennzeichnet,</u> daß die
   mechanische Haftbrücke ein Spinn- oder Krempelvlies aus Kunstfasern,
   vorzugsweise Polyesterfasern, ist.

5. Verbundmaterial nach Anspruch 1, <u>dadurch gekennzeichnet,</u> daß die
   mechanische Haftbrücke aus einem Glasfaservlies besteht.

6. Verbundmaterial nach Anspruch 1, <u>dadurch gekennzeichnet,</u> daß die
   Metallschicht D aus einem duktilen, verformbaren Metall mit einer
   Reißdehnung von mindestens 10 % besteht, vorzugsweise aus Aluminium,
   Kupfer oder Stahl.